**Europäisches Patentamt**

**European Patent Office**

**Office européen des brevets**

(19)

(11) Veröffentlichungsnummer : **0 155 258 B1**

# (12) EUROPÄISCHE PATENTSCHRIFT

(45) Veröffentlichungstag der Patentschrift :
27.05.87

(51) Int. Cl.⁴ : **G 11 B 33/04**

(21) Anmeldenummer : **85890037.6**

(22) Anmeldetag : **14.02.85**

(54) **Vorrichtung zur Aufnahme von steifen, flachen Gegenständen.**

(30) Priorität : **15.02.84 AT 500/84**

(43) Veröffentlichungstag der Anmeldung :
**18.09.85 Patentblatt 85/38**

(45) Bekanntmachung des Hinweises auf die Patenterteilung : **27.05.87 Patentblatt 87/22**

(84) Benannte Vertragsstaaten :
**AT BE CH DE FR GB IT LI LU NL SE**

(56) Entgegenhaltungen :
**DE-U- 1 395 202**
**DE-U- 8 421 249**
**FR-A- 2 127 857**
**FR-A- 2 130 788**
**FR-A- 2 401 783**
**US-A- 3 446 360**
**US-A- 3 554 381**
**US-A- 3 784 269**

(73) Patentinhaber : **Lift Verkaufsgeräte-Gesellschaft m.b.H.**
**Franzensgasse 25**
**A-1050 Wien (AT)**

(72) Erfinder : **Schubert, Otto, Jr.**
**Alserstrasse 65**
**A-1080 Wien (AT)**

(74) Vertreter : **Weinzinger, Arnulf, Dipl.-Ing. et al**
**Patentanwälte Dipl.-Ing. Helmut Sonn Dr. Heinrich Pawloy Dipl.-Ing. Arnulf Weinzinger Riemergasse 14**
**A-1010 Wien (AT)**

## Beschreibung

Die Erfindung betrifft eine Präsentationsvorrichtung zur Aufnahme und Zurschaustellung von steifen, flachen Gegenständen, wie Schallplatten- oder Magnetbandkassetten, in hintereinandergereihter Anordnung, mit einem Boden und mit in Abstand oberhalb von diesem zwischen zwei Seitenbegrenzungen hintereinander vorgesehenen Mitteln zur Abstützung und Schwenklagerung der einzelnen Gegenstände, welche dadurch zwischen einer nach hinten geneigten, im wesentlichen aufrechten Schräglage und einer nach vorne geneigten, im wesentlichen aufrechten Schräglage hin und her schwenkbar sind, wobei die Mittel zur Abstützung und Schwenklagerung eines einzelnen Gegenstandes durch ein Paar sich quer erstreckender, zueinander paralleler Haltestangen gebildet sind, die in derartigen Abständen in jedem Paar angeordnet und in ihren Querschnittsabmessungen sowie in ihrem Abstand vom Boden derart an die Dicke und Höhe der Gegenstände angepaßt sind, daß diese in der geneigten Schräglage jeweils mit ihrer Vorderseite und Rückseite unterhalb ihrer Schwerpunkte an den zwei benachbarten Haltestangen gleichzeitig anliegen.

Für die Zurschaustellung von Musik(Audio)-Kassetten, Film(Video)-Kassetten, Schallplattenkassetten, insbesondere den sog. CD-(Compact-Disc)-Kassetten, werden derzeit häufig Verkaufsständer verwendet, in denen die Kassetten übereinander, insbesondere in Fächern versperrbar, aufgenommen sind. Diese bekannten Verkaufsständer benötigen jedoch verhältnismäßig viel Platz, wobei dennoch in diesen bekannten Ständern nur relativ wenig Kassetten untergebracht werden können.

Andererseits werden herkömmliche Schallplatten in ihren Kartonhüllen vielfach in kistenförmigen Behältern in den Geschäften zur Schau gestellt, wobei unter den so aufbewahrten, dünne Gegenstände bildenden Schallplatten ähnlich wie bei Karteikarten in einem Karteikasten « geblättert » werden kann. Eine solche Unterbringung ist jedoch bei den genannten Tonband- und CD-Kassetten zufolge ihrer größeren Dicke (z. B. 1 cm und mehr) im Verhältnis zu den Höhen- und Breitenabmessungen ohne weitere Maßnahmen unzweckmäßig bzw. nicht möglich, da die Kassetten verrutschen und beschädigt werden.

Wie nun beispielsweise aus der US-A-3 784 269, der US-A-3 446 360, der FR-A-2 130 788, der FR-A-2 127 857 und der GB-A-2 005 226 (bzw. der dieser entsprechenden FR-A-2 401 783) ersichtlich ist, wurde ein Weg, auch dickere Gegenstände, wie Audiokassetten etc., schwenkbar in einer Präsentationsvorrichtung aufzubewahren, darin gesehen, für diese Gegenstände als Mittel zur Abstützung und Schwenklagerung der Gegenstände eigene Halter vorzusehen, die in der Vorrichtung schwenkbar gelagert sind und die Gegenstände aufnehmen. Dabei können die Halter wannen- oder klammerartig, mit in entsprechenden Ausnehmungen von Seitenwänden schwenkbar aufgenommenen Lagerzapfen oder dergl., oder schachtelartig, mit an den Schmalseiten vorgesehenen Lagervorsprüngen, die mit entsprechenden Lagerausnehmungen in Seitenwänden in Eingriff stehen, ausgebildet sein. Diese Lösungen sind jedoch ersichtlich konstruktiv aufwendig und teuer, und überdies verhindern diese bekannten Halter eine gute Platzausnutzung, wie sie anzustreben ist, um möglichst viele Gegenstände unterbringen zu können.

Aus der DE-B-715 042 ist ferner eine Schubkasteneinrichtung zur Aufbewahrung von Akten, Mappen, Karteien oder anderem Schriftgut bekannt, bei der zur Unterteilung Stützstangen vorgesehen sind, die sich in Abständen voneinander und parallel zueinander horizontal zwischen zwei senkrechten Wänden erstrecken. Mit diesen Stützstangen wirken am Schubkastenboden vorgesehene Anschläge zusammen, um jeweils das Schriftgut, gegebenenfalls zusammen mit einer das Schriftgut abstützenden Stützplatte, in einer nach hinten geneigten Schräglage möglichst rutschsicher abzustützen. Diese Art der Abstützung eignet sich jedoch nur für dünne, blatt- oder kartenförmige Gegenstände, von denen jeweils mehrere zusammengehörige in einem zwischen zwei benachbarten Stützstangen gebildeten « Abteil » aufbewahrt werden, wobei auch nur in bestimmtem Ausmaß ein Blättern dieser Gegenstände möglich ist. Wenn nämlich in einem Abteil Gegenstände aus ihrer nach hinten geneigten Normal-Schräglage einzeln oder gruppenweise · nach vorne geklappt werden, müssen sie händisch in der vorgeklappten Stellung gehalten werden. Außerdem wird bei einem solchen Umklappen oder « Blättern » ein Verrutschen der Gegenstände keineswegs sicher vermieden, vielmehr können die Gegenstände vor allem dann, wenn in einem Abteil eher wenig Gegenstände enthalten sind, mit ihren unteren Rändern verhältnismäßig leicht aus den zwischen den Anschlägen gebildeten Nuten herausspringen und sogar unter einer Stützstange hindurch in ein anderes Abteil wegrutschen. Dies trifft umso mehr zu, je größer die Dickenabmessung der Gegenstände ist.

Ein ähnlicher Karteikasten mit gesonderten Stützplatten für das aufzunehmende Gut ist ferner aus der Schrift DE-U-1 395 202 bekannt, wobei auch hier, ähnlich wie in der vorstehend beschriebenen Schubkasteneinrichtung, durch die Stützplatten Abteile begrenzt werden, in denen das aufzubewahrende Schriftgut eingeordnet wird, das sich an den Stützplatten abstützt. Zur Halterung der Stützplatten sind in Abständen voneinander Stabpaare am Boden des Kastens horizontal angeordnet, wobei die Stützplatten jeweils mit ihrem unteren Rand zwischen die beiden Stäbe eines solchen Paares eingesteckt werden. Dadurch können diese Stützplatten einen Winkelauschlag nach vorne und nach hinten ausführen. Dabei müssen allerdings die Stützplatten am unteren Rand beidseits abgesetzt sein, wobei sich die zurücktretenden Kanten auf horizontale Leisten legen, die längs der beiden Seitenwände des Kastens vorgesehen sind und den Boden für das aufzunehmende Gut bilden, d. h. letzteres abstützen. In der Schrift DE-U-1 395 202 ist zwar erwähnt, daß eine soche Absetzung der Stützplatte nicht unbedingt erforderlich sei, jedoch müßten dann die beiden Leisten längs der Kastenseitenwände entfallen, wodurch in der Folge die zur Abstützung der Stützplatten vorgesehenen Stabpaare ein Hindernis für das in den Abteilen aufgenommene Gut bei dessen Anlage an den Stützplatten bilden. Darüberhinaus ist auch hier ein Blättern in diesem Gut, z. B. Karteikarten, nur unter Inkaufnahme eines Verrutschens etc. in herkömmlicher Weise möglich, ähnlich wie dies eingangs bei den in einfachen kistenförmigen Behältern aufgenommenen herkömmlichen Schallplatten beschrieben wurde ; eine individuelle Schwenklagerung für das aufzunehmende Gut selbst ist auch hier nicht vorgesehen.

Der Erfindung liegt daher die Aufgabe zugrunde, eine einfach ausgebildete Vorrichtung der eingangs angegebenen Art zu schaffen, in der viele steife, flache Gegenstände, insbesondere Kassetten, untergebracht und den Kunden dargeboten werden können, wobei eine gute Platzausnützung erzielt wird und ein « Blättern » unter den Kassetten oder dergl. eher dicken Gegenständen möglich sein soll, ohne daß die Gegenstände dabei verrutschen und beeinträchtigt werden.

Hierzu ist die erfindungsgemäße Vorrichtung der eingangs erwähnten Art dadurch gekennzeichnet, daß alle Haltestangen gleichen Abstand voneinander haben, so daß zwei beliebige nebeneinanderliegende Haltstangen ein Paar zur Aufnahme eines Gegenstandes bilden, und daß bei einem in die nach vorne geneigte Schräglage geschwenkten Gegenstand und einem darauffolgenden, in die nach hinten geneigte Schräglage geschwenkten Gegenstand die unteren Ränder dieser Gegenstände einander nicht behindern. Bei dieser Ausbildung haben die Haltestangen eine mehrfache Funktion. Diese Haltestangen stützen nämlich direkt die zu präsentierenden Gegenstände, insbesondere die genannten Kassetten, an der Vorderseite und an der Rückseite ab, wobei die Gegenstände zufolge der Halterung bloß in ihrem unteren Bereich ungehindert einsehbar sind, und sie trennen dabei die Gegenstände voneinander, so daß sie nicht aneinander anliegen. Die Haltestangen verhindern weiters ein gegenseitiges Verrutschen der Gegenstände und bilden für diese eine individuelle Schwenklagerung, wobei sie auf einfache und dabei sichere Weise ein « Blättern » ähnlich wie bei einem Karteikasten ermöglichen. Je nach Größe des Abstandes zwischen den Haltestangen im Verhältnis zur Dicke der Gegenstände werden die Gegenstände in einer stärker oder weniger stark geneigten Schräglage abgestützt. Da die Gegenstände in der jeweiligen geneigten Lage sowohl an der Vorderseite als auch an der Rückseite von einer Haltestange gehalten sind, wird ein Herauskippen der Gegenstände verhindert. An sich liegen aber selbstverständlich die Gegenstände mit ihrem unteren Rand auf dem Boden auf, und die Abstützung der Gegenstände kann, im Querschnitt gesehen, als eine Art Dreipunktabstützung angesehen werden.

Bei der erfindungsgemäßen Vorrichtung kann der Boden selbst ein durchgehender, plattenförmiger Boden sein, er kann jedoch auch unterbrochen sein und insbesondere bloß durch zwei sich längserstreckende Randleisten gebildet sein. Insbesondere ist es hier aus Herstellungsgründen vorteilhaft, wenn der Boden durch horizontale Flansche von die Seitenbegrenzungen definierenden Winkelprofilen gebildet ist.

Die Haltestangen können im Querschnitt z. B. rechteckig, insbesondere quadratisch, mit abgerundeten Ecken, sein, oder sie können auch einen ovalen Querschnitt aufweisen. Vor allem wenn die Haltestangen einen kreisförmigen Querschnitt aufweisen, können die Gegenstände beim Blättern oder Verschwenken in vorteilhafter Weise an den Haltestangen gleiten oder abrollen.

Die Haltestangen können durchaus fest in den Seitenbegrenzungen angebracht werden, wie etwa durch Annieten. Es hat sich jedoch herausgestellt, daß es beim « Umblättern » der Gegenstände, in der letzten Phase beim Verschwenken, für die Abstützung der Gegenstände besonders günstig ist, wenn die Haltestangen in den Seitenbegrenzungen drehbar gelagert sind. Beim Verschwenken der Gegenstände können dann die Haltestangen, wenn die Gegenstände jeweils mit einem anderen Bereich der Vorderseite bzw. Rückseite an ihnen zur Anlage kommen als in der vorherigen Schwenklage, gegebenenfalls etwas verdreht werden, wodurch die Gegenstände besonders geschont werden können.

Insbesondere Musikkassetten sind verhältnismäßig schmal, und es ist daher aus Platzgründen wünschenswert, mehrere Kassetten oder dergl. Gegenstände nebeneinander, in einer Reihe, in der Vorrichtung anzuordnen. In diesem Fall gestaltet sich das « Umblättern » der Gegenstände etwas umständlich, wenn die Gegenstände einer Reihe, z. B. fünf Gegenstände nebeneinander, einzeln verschwenkt werden müssen. Die in Bodennähe vorgesehenen Haltestangen bieten hier nun auf einfache Weise die Möglichkeit, eine Verbesserung in der Handhabung zu erzielen. Erfindungsgemäß ist es daher weiters von Vorteil, wenn an den Haltestangen von ihnen hochstehende Schwenkelemente angebracht sind, die sich im wesentlichen über die Länge der Haltestangen bzw. Breite der Vorrichtung erstrecken. Diese Schwenkelemente, wie z. B. Schwenkbügel, -platten oder dergl., bilden eine Art Mitnehmer, um eine Reihe von nebeneinander angeordneten Kassetten auf einmal umschwenken zu können.

Um den Zusammenbau der Vorrichtung möglichst einfach zu gestalten, ist es dabei weiters vorteilhaft, wenn die Schwenkelemente mit den drehbar gelagerten Haltestangen fest verbunden sind. Insbesondere ist es aus diesem Grund auch günstig, wenn die Schwenkelemente einstückig mit den drehbar gelagerten Haltestangen sind. Bei diesen Ausbildungen werden die Haltestangen mit den Schwenkelementen in einem Arbeitsgang zwischen die Seitenbegrenzungen eingesetzt. Aus Herstellungsgründen kann es jedoch andererseits auch von Vorteil sein, wenn die Schwenkelemente gesonderte Bauteile sind, die an den Haltestangen schwenkbar gelagert sind. Diese Ausbildung ist vor allem dann vorzusehen, wenn die Haltestangen fest angeordnet sind.

Eine besonders vorteilhafte Ausführungsform der erfindungsgemäßen Vorrichtung ist weiters dadurch gekennzeichnet, daß die als Schwenkbügel ausgebildeten Schwenkelemente im wesentlichen die Form eines « T » oder eines umgekehrten « U » oder « L » aufweisen, wobei der obenliegende, waagrechte Stegteil zur Bildung eines Distanzelementes zwischen den Gegenständen dieselbe Stärke wie die Haltestangen aufweist. Bei dieser Ausbildung, die sich im übrigen durch geringen Materialverbrauch und geringe Masse auszeichnet, dienen die Stegteile der Schwenkbügel auch als Distanzelemente, die die Gegenstände zusätzlich in einer exakten zueinander parallelen Ausrichtung halten.

Von Vorteil ist es weiters, wenn die Schwenkelemente Einschubfächer für Preis-, Werbeschilder oder dergl. bilden. In den Einschubfächern können dabei beispielsweise Schilder untergebracht werden, die Angaben über die Art und Herkunft der zur Schau gestellten Gegenstände (z. B. die Aufschriften « Opern », « Orchesterwerke », unter Angabe des Namens des Komponisten) enthalten.

Um das « Umblättern » weiter zu erleichtern, ist es ferner auch günstig, wenn an den Schwenkelementen jeweils ein Griff vorgesehen ist. Der Griff kann dabei z. B. durch plattenförmige Vorsprünge oder Verbreiterungen, lappenartige Fortsätze oder ösenartige Ausbiegungen in einem oberen Eckbereich der Schwenkelemente gebildet sein.

Sofern als Schwenkelemente Platten vorgesehen sind, können diese in gleicher Weise Abschnitte von Strangprofilen wie Spritzgußteile sein. Im Fall von Schwenkbügeln bestehen diese bzw. ihre Teile beispielsweise ebenfalls aus Strangprofilabschnitten, die in der gewünschten Form zusammengesetzt werden, oder aus Drahtmaterial.

Die Erfindung wird nachstehend anhand von in der Zeichnung dargestellten Ausführungsbeispielen noch weiter erläutert.

In der Zeichnung zeigen dabei im einzelnen :

Figur 1 einen Querschnitt durch eine Vorrichtung zur Aufnahme bzw. Zurschaustellung von sog. Compact-Disc-Kassetten ;

Figur 2 einen Längsschnitt durch diese Vorrichtung, gemäß der Linie II-II in Fig. 1 ;

Figur 3 einen Querschnitt durch eine abgewandelte Vorrichtung, die zur Aufnahme und Präsentation von Musikkassetten bestimmt ist ;

Figur 4 einen Längsschnitt durch diese Vorrichtung, gemäß der Linie IV-IV in Fig. 3 ; und

Figur 5 in einem Teil-Längsschnitt ähnlich Fig. 4, jedoch in größerem Maßstab, ein Detail der Vorrichtung zur Veranschaulichung der Bildung eines Einschubfaches durch einen Schwenkbügel und eine zugehörige Haltestange.

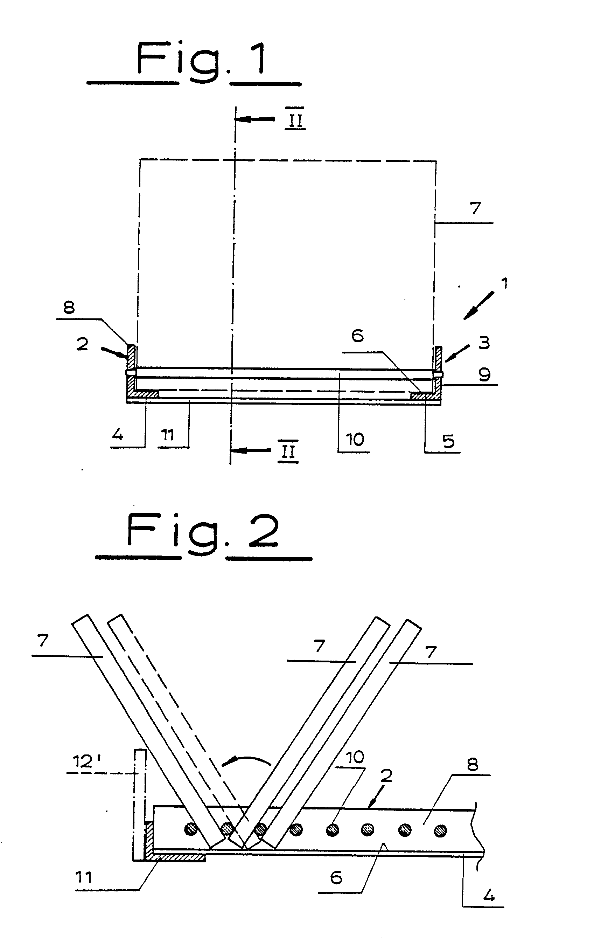

In Fig. 1 und 2 ist eine ladenartige Vorrichtung 1 zur Aufnahme und Zurschaustellung von sog. Compact-Disc(CD-)-Kassetten gezeigt, wobei die dargestellte Vorrichtung beispielsweise an einem Regalfach oder Gestell oder in einer eigenen Lade befestigt werden kann, was aber zwecks Vereinfachung der Darstellung nicht näher veranschaulicht ist. Die Vorrichtung 1 weist zwei längsseitige Winkelprofile 2, 3 auf, die mit ihren horizontalen unteren Flanschen 4, 5 einen — hier unterbrochenen — Boden 6 definieren. Auf diesem Boden 6 stehen die in Fig. 1 und 2 mit gestrichelten Linien veranschaulichten CD-Kassetten 7 mit ihren unteren Rändern. Um diese CD-Kassetten 7 in einer entweder nach vorne oder nach hinten geneigten Stellung, wie aus Fig. 2 ersichtlich, zu halten, sind Haltestangen 10 vorgesehen, die sich zwischen den aufrechten Flanschen 8, 9 der Winkelprofile 2, 3 quer erstrecken. Diese Haltestangen 10 besitzen einen kreisförmigen Querschnitt und sind an den Enden mit einem durchmesserkleineren Endabschnitt in entsprechende Bohrungen in den durch die aufrechten Flansche 8, 9 gebildeten Seitenbegrenzungen bzw. Seitenwangen eingesteckt und so darin drehbar gelagert.

Wie insbesondere aus Fig. 2 ersichtlich ist, sind die Haltestangen 10 in einem derartigen Abstand voneinander angeordnet, daß ein Schrägstellen der CD-Kassetten 7 möglich ist, wobei diese Kassetten 7 jeweils mit der Vorderseite an einer vorderen Haltestange 10 und mit der Rückseite an einer hinteren Haltestange 10 anliegen und so abgestützt sind. Der Neigungswinkel der Kassetten 7 hängt dabei, wie ohne weiteres erkennbar ist, vom Verhältnis dieses Abstandes zur Dicke der CD-Kassetten 7 ab. Weiters befinden sich die Haltestangen 10 in einem derartigen Abstand vom Boden 6, daß die Kassetten 7 in der geneigten Lage nicht zwischen zwei Haltestangen 10 herauskippen können, d. h. jede Kassette 7 liegt immer an zwei Haltestangen 10 an, egal ob sie sich in der nach vorne gekippten Schrägstellung oder in der normalerweise eingenommenen nach hinten geneigten Schräglage befindet. Die Mindesthöhe der Haltestangen 10 über dem Boden 6 wird demgemäß in Anpassung an den gegenseitigen Abstand der Haltestangen 10 bzw. an die Dicke der Kassetten 7 bestimmt. Andererseits ist die Höhe der Haltestangen 10 über dem Boden 6, wie ebenfalls unmittelbar einzusehen ist, nach oben hin dadurch begrenzt, daß zwei Kassetten 7, von denen die eine nach vorne und die andere nach hinten gekippt ist, einander mit den unteren, nicht am Boden aufliegenden Rändern nicht beeinträchtigen dürfen. Die maximale Höhe hängt u. a. von der Dicke der Haltestangen 10 und vom gewählten Neigungswinkel ab, wobei die Haltestangen 10 nicht zu dick gewählt werden sollen, um möglichst wenig Platz zu verlieren, d. h. möglichst viele Kassetten unterbringen zu können. Selbstverständlich dürfen die Haltestangen 10 aber auch nicht zu dünn sein, da dann zwei in einander entgegengesetzte Richtungen gekippte Kassetten 7 einander wieder mit den unteren Rändern im Wege stehen würden. Die Abstands- und Größenverhältnisse können im jeweiligen Einzelfall entsprechend den aufzubewahrenden Gegenständen ohne weiteres festgelegt werden, wesentlich ist nur die erwähnte Einspannung der Kassetten 7 zwischen den Haltestangen 10 bzw. die beschriebene « Dreipunktabstützung ». Beispielsweise hat es sich für die Aufbewahrung von Compact-Disc-Kassetten (die eine Dicke von ca. 10 mm aufweisen) als günstig erwiesen, die Haltestangen mit ihren Drehachsen in einer Höhe von 9 mm über dem Boden anzubringen, wobei die lichte Weite zwischen den Haltestangen 13 mm und der Durchmesser der Haltestangen 4 mm beträgt.

Um die beiden Winkelprofile 2, 3 zu einer stabilen Konstruktion miteinander zu verbinden, ist sowohl am vorderen als auch am hinteren Ende der Vorrichtung 1 eine Querleiste 11 vorgesehen (in Fig. 2 ist nur die vordere Querleiste 11 ersichtlich), die im vorliegenden Ausführungsbeispiel als Winkelprofil ausgebildet und mit den längsseitigen Winkelprofilen 2, 3 beispielsweise durch Kleben oder Löten fest verbunden ist, so daß eine Art Rahmenstruktur erhalten wird. An diesen Querleisten 11 können falls erwünscht noch Front- oder Dekorplatten befestigt, z. B. angeklebt oder angeschraubt werden, wie in Fig. 2 bei 12' mit strichpunktierten Linien schematisch veranschaulicht ist.

Wie insbesondere aus Fig. 2 ersichtlich ist, ermöglichen die durch die Haltestangen 10 gebildeten Halterungen für die Kassetten 7 auf einfache Weise ein « Blättern », d. h. ein Vorwärts- und Rückwärtsschwenken der Kassetten 7, um die in der Vorrichtung 1 aufbewahrten Kassetten 7 zu betrachten, ohne daß die Kassetten 7 dabei verrutschen oder zurückfallen. Falls die gewünschte Kassette 7 gefunden wird, kann sie problemlos entweder vom Kunden selbst oder vom Verkaufspersonal aus der Vorrichtung 1 genommen werden. Sofern die Vorrichtung 1 an einer vom Verkaufspersonal nicht überblickbaren Stelle aufgestellt ist, ist es beispielsweise auch möglich, leere Kassetten 7 in der Vorrichtung 1 aufzubewahren und die zugehörigen Compact-Disc-Platten selbst gesondert, etwa bei einem Verkaufstisch oder bei der Kassa, aufzubewahren.

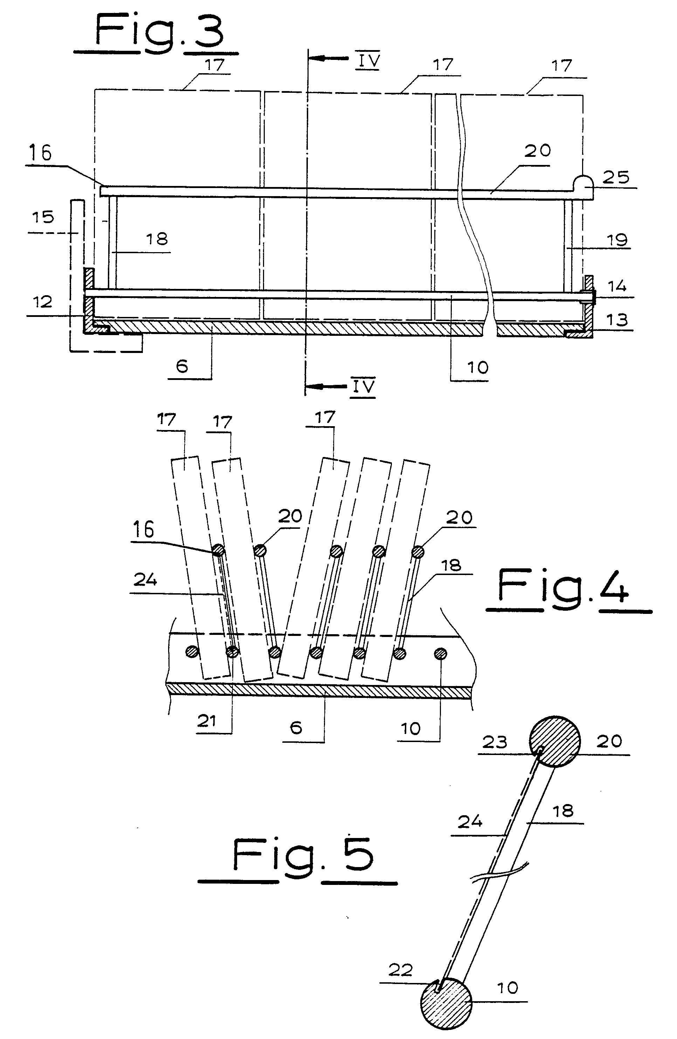

In den Fig. 3, 4 und 5 ist eine zur Aufbewahrung und Zurschaustellung von Musikkassetten 17 bestimmte Ausführungsform veranschaulicht, wobei, wie aus Fig. 3 ersichtlich ist, jeweils mehrere Musikkassetten 17 nebeneinander in einer Reihe angeordnet werden. Bei diesem Ausführungsbeispiel ist ein voller Boden 6 vorgesehen, an dessen Längs-Seitenrändern Seitenwangen bzw. Seitenbegrenzungen 12, 13 hochstehen, die beispielsweise wiederum durch Winkelprofilabschnitte gebildet sind. Selbstverständlich wäre es auch möglich, anstatt der gezeigten Ausführung, mit am Boden 6 befestigten Seitenwangen 12, 13, auch ein einstückiges, im Querschnitt U-förmiges Profilstück vorzusehen.

In den Seitenwangen 12, 13 sind wiederum in konstanten Abständen voneinander Haltestangen 10 drehbar gelagert. Dabei sind die Enden der Haltestangen 10 in entsprechenden Bohrungen in den Seitenwangen 12, 13 aufgenommen, wobei zur Sicherung der Haltestangen 10 gegen eine axiale Verschiebung beispielsweise Hohlnieten 14 von außen her angebracht sein können, wie in Fig. 3 auf der rechten Seite veranschaulicht ist. Anstattdessen können die Haltestangen 10 auch einfach durch Laden-Seitenwangen gegen Axialverschiebungen gesichert werden, wie in Fig. 3 auf der linken Seite bei 15 schematisch mit gestrichelten Linien veranschaulicht ist. Diese Sicherung gegen axiale Längsverschiebungen ergibt sich insbesondere dann, wenn die vorliegende Vorrichtung in eine Lade, Kiste oder dergl. oder in ein Regalfach mit Trennwänden eingebaut wird.

An den Haltestangen 10 sind weiters Schwenkelemente in Form von Schwenkbügeln 16 angebracht, wobei diese Schwenkbügel 16 im vorliegenden Ausführungsbeispiel an den Haltestangen 10 durch Anlöten oder Ankleben fest befestigt sind. Anstattdessen ist aber auch eine einstückige Ausbildung der Schwenkbügel 16 und Haltestangen 10 möglich, und darüberhinaus können die Schwenkbügel auch auf den Haltestangen 10, etwa mittels Hülsen, verschwenkbar gelagert werden. Eine derartige Schwenklagerung ist insbesondere dann vonnöten, wenn die Haltestangen 10 nicht drehbar, sondern fest in den Seitenwangen sitzen.

Jeder Schwenkbügel 16 weist im vorliegenden Ausführungsbeispiel zwei seitliche Arme 18, 19 auf, die an die jeweilige Haltestange 10 anschließen und einen waagrechten Stegteil 20 mit dieser verbinden. Selbstverständlich wäre es anstatt der gezeigten Ausbildung auch möglich, nur einen Verbindungsarm, etwa in der Mitte, vorzusehen, aus Stabilitätsgründen empfiehlt sich jedoch eine Ausbildung mit mehreren, etwa wie dargestellt zwei, Verbindungsarmen. Anstatt der gezeigten Schwenkbügel können als Schwenkelemente ferner auch z. B. Stützplatten vorgesehen werden, deren Umriß etwa jenem des in Fig. 3 ersichtlichen Schwenkbügels entsprechen kann, und insofern kann sich auch eine zeichnerische Darstellung derartiger plattenförmiger Schwenkelemente erübrigen, insbesondere da die nämliche Funktion, und zwar ein gleichzeitiges « Umblättern » aller Kassetten 17 einer Reihe mit Hilfe des Schwenkelements, in beiden Fällen in gleicher Weise gegeben ist, wie unmittelbar einzusehen ist. Die Schwenkelemente 16 könnten im Hinblick auf ihre Funktion beim « Umblättern » auch als « Wendeteiler » bezeichnet werden.

Im Ausführungsbeispiel gemäß Fig. 3, 4 und 5 besitzt der Stegteil 20 einen kreisförmigen Querschnitt mit demselben Durchmesser wie die Haltestangen 10, so daß dieser Stegteil 20 als zusätzliches Distanzelement zwischen den in einer Richtung geneigten, an sich bereits durch die Haltestangen 10 in einer parallelen Anordnung gehaltenen Kassetten 17 dient. Weiters können der Stegteil 20 und die Haltestange 10 auch zur Bildung eines Einschubfaches herangezogen werden, wie in Fig. 4 bei 21 veranschaulicht ist, wobei hiefür im Stegteil 20 einerseits bzw. in der Haltestange 10 andererseits einander zugewandte Nuten 22, 23 in gegenseitiger Ausrichtung vorgesehen sind (vgl. auch Fig. 5), in die ein Schild oder dergl. von der Seite her eingeschoben werden kann, welches Angaben über die enthaltenen Kassetten, wie etwa die Art der Kassetten, Preisangaben usw., enthalten kann. Ein derartiges Schild ist in Fig. 4 und 5 schematisch bei 24 mit gestrichelter Linie veranschaulicht.

Um das Umschwenken einer Reihe von Kassetten 17 mit Hilfe des Schwenkbügels 16 zu erleichtern, trägt dieser in einem oberen Eckbereich einen Griff 25, beispielsweise in Form einer plattenartigen Verbreiterung des Stegteiles 20 oder eines lappenartigen Fortsatzes. Anstattdessen könnte der Stegteil 20 an der angegebenen Stelle auch hakenförmig oder ösenförmig zum Griff 25 gebogen sein.

Wenn die Erfindung vorstehend anhand von bevorzugten Ausführungsbeispielen näher erläutert wurde, so sind doch selbstverständlich weitere Abwandlungen und Modifikationen im Rahmen der Erfindung möglich. So können beispielsweise die Haltestangen 10 auch wie erwähnt einen anderen als den gezeigten kreisförmigen Querschnitt, z. B. einen ovalen oder rechteckigen Querschnitt, aufweisen, und sie können, wie ebenfalls bereits erwähnt, auch fest an den Seitenbegrenzungen fixiert sein. Ferner kann bei der Ausführungsform gemäß Fig. 3 und 4 ein durchbrochener, etwa gitterförmiger oder rostförmiger Boden 6 vorgesehen werden, und umgekehrt kann bei der Vorrichtung gemäß Fig. 1 und 2 eine volle Bodenplatte angebracht werden. Die Seitenbegrenzungen, z. B. 8, 9, können ferner derart weit hochgezogen sein, daß sie die aufbewahrten Gegenstände, insbesondere Kassetten, in der Höhe überragen, und es kann dann auch ein Verschlußdeckel, etwa als Schutz gegen Verstauben, außerhalb der Geschäftszeiten angebracht werden.

Die Haltestangen 10 bestehen vorzugsweise aus Stahldrahtmaterial, wogegen die verschiedenen beschriebenen Winkelprofile vorzugsweise Abschnitte von Aluminiumstrangprofilen sind. Zur Sicherung der Haltestangen 10 in den Seitenbegrenzungen gegen eine axiale Verschiebung, wenn keine stufenförmig abgesetzten Endabschnitte oder Hohlnieten vorgesehen sind, können auch außen auf die Seitenbegrenzungen in der Höhe der Bohrungen, in denen die Haltestangen mit ihren Enden aufgenommen sind, Kunststoffolien, Plättchen oder Streifen aufgeklebt werden.

## Patentansprüche

1. Präsentationsvorrichtung zur Aufnahme und Zurschaustellung von steifen, flachen Gegenständen (7 ; 17), wie Schallplatten- oder Magnetbandkassetten, in hintereinandergereihter Anordnung, mit einem Boden (6) und mit in Abstand oberhalb von diesem zwischen zwei Seitenbegrenzungen (8, 9) hintereinander vorgesehenen Mitteln (10) zur Abstützung und Schwenklagerung der einzelnen Gegenstände (7 ; 17), welche dadurch zwischen einer nach hinten geneigten, im wesentlichen aufrechten Schräglage und einer nach vorne geneigten, im wesentlichen aufrechten Schräglage hin und her schwenkbar sind, wobei die Mittel (10) zur Abstützung und Schwenklagerung eines einzelnen Gegenstandes (7 ; 17) durch ein Paar sich quer erstreckender, zueinander paralleler Haltestangen (10) gebildet sind, die in derartigen Abständen in jedem Paar angeordnet und in ihren Querschnittsabmessungen sowie in ihrem Abstand vom Boden (6) derart an die Dicke und Höhe der Gegenstände (7 ; 17) angepaßt sind, daß diese in der geneigten Schräglage jeweils mit ihrer Vorderseite und Rückseite unterhalb ihrer Schwerpunkte an den zwei benachbarten Haltestangen (10) gleichzeitig anliegen, dadurch gekennzeichnet, daß alle Haltestangen (10) gleichen Abstand voneinander haben, so daß zwei beliebige nebeneinanderliegende Haltstangen ein Paar zur Aufnahme eines Gegenstandes bilden, und daß bei einem in die nach vorne geneigte Schräglage geschwenkten Gegenstand und einem darauffolgenden, in die nach hinten geneigte Schräglage geschwenkten Gegenstand die unteren Ränder dieser Gegenstände einander nicht behindern.

2. Vorrichtung nach Anspruch 1, dadurch gekennzeichnet, daß der Boden (6) unterbrochen ausgebildet ist.

3. Vorrichtung nach Anspruch 2, dadurch gekennzeichnet, daß der Boden (6) durch horizontale Flansche (4, 5) von die Seitenbegrenzungen (8, 9) definierenden Winkelprofilen (2, 3) gebildet ist.

4. Vorrichtung nach einem der Ansprüche 1 bis 3, dadurch gekennzeichnet, daß die Haltestangen (10) in den Seitenbegrenzungen (2, 3 ; 12, 13) drehbar gelagert sind.

5. Vorrichtung nach einem der Ansprüche 1 bis 4, dadurch gekennzeichnet, daß an den Haltestangen (10) von ihnen hochstehende Schwenkelemente (16) angebracht sind, die sich im wesentlichen über die Länge der Haltestangen (10) bzw. Breite der Vorrichtung (1) erstrecken.

6. Vorrichtung nach Anspruch 5, dadurch gekennzeichnet, daß die Schwenkelemente (16) mit den drehbar gelagerten Haltestangen (10) fest verbunden sind.

7. Vorrichtung nach Anspruch 5, dadurch gekennzeichnet, daß die Schwenkelemente (16) einstückig mit den drehbar gelagerten Haltestangen (10) sind.

8. Vorrichtung nach Anspruch 5, dadurch gekennzeichnet, daß die Schwenkelemente (16) an den Haltestangen (10) schwenkbar gelagert sind.

9. Vorrichtung nach einem der Ansprüche 5 bis 8, dadurch gekennzeichnet, daß die als Schwenkbügel ausgebildeten Schwenkelemente (16) in Ansicht im wesentlichen die Form eines « T » oder eines umgekehrten « U » oder « L » aufweisen, wobei der obenliegende, waagrechte Stegteil (20) zur Bildung eines Distanzelementes zwischen den Gegenständen (17) dieselbe Stärke wie die Haltestangen (10) aufweist.

10. Vorrichtung nach einem der Ansprüche 5 bis 9, dadurch gekennzeichnet, daß die Schwenkelemente (16) Einschubfächer (21) für Preis-, Werbeschilder oder dergl. (24) bilden.

11. Vorrichtung nach einem der Ansprüche 5 bis 10, dadurch gekennzeichnet, daß an den Schwenkelementen (16) jeweils ein Griff (25) vorgesehen ist.

## Claims

1. Display device for the seating and exhibition of stiff, flat objects (7 ; 17), such as records or magnetic tape cassettes, in an arrangement one behind another, comprising a base (6) and, at a distance above this base and between two lateral boundary members (8, 9), means (10) disposed one behind another for supporting and pivotally seating the single objects (7 ; 17), which are thereby pivotal to and fro between a backwardly inclined, substantially upright oblique position and a forwardly inclined, substantially upright oblique position, the means (10) for supporting and pivotally seating a single object (7 ; 17) being formed by a pair of transversely extending, mutually parallel holding rods (10), which are disposed at such spacings in each pair and are adapted in their cross-sectional dimensions and in their distance from the base (6) to the thickness and height of the objects (7 ; 17) in such a manner that these objects, in the inclined, oblique position, each bear simultaneously with their front face and rear face below their centres of gravity against the two adjacent holding rods (10), characterized in that all the holding rods (10) are at the same spacing from one another, so that any two mutually adjacent holding rods constitute a pair for seating one object, and that, where one object is pivotted into the forwardly inclined oblique position and the next succeeding object is pivotted into the backwardly inclined oblique position, the lower edges of these objects do not interfere with each other.

2. Device according to Claim 1, characterized in that the base (6) is of interrupted form.

3. Device according to Claim 2, characterized in that the base (6) is formed of horizontal flanges (4, 5) of angle profiles (2, 3) constituting the lateral boundary members (8, 9).

4. Device according to one of Claims 1 to 3, characterized in that the holding rods (10) are rotatably seated in the lateral boundary members (2, 3 ; 12, 13).

5. Device according to one of Claims 1 to 4, characterized in that pivot elements (16) projecting upwards from the holding rods (10) are mounted on the holding rods, which elements extend substantially over the length of the holding rods (10) or width of the device (1).

6. Device according to Claim 5, characterized in that the pivot elements (16) are firmly connected to the rotatably mounted holding rods (10).

7. Device according to Claim 5, characterized in that the pivot elements (16) are formed in one piece with the rotatably mounted holding rods (10).

8. Device according to Claim 5, characterized in that the pivot elements (16) are pivotally journalled on the holding rods (10).

9. Device according to one of Claims 5 to 8, characterized in that the pivot elements (16), constructed as pivotting stirrups, possess in elevation substantially the form of a « T » or of an inverted « U » or « L », the upwardly situated, horizontal member (20) possessing the same thickness as the holding rods (10) in order to form a spacer element between the objects (17).

10. Device according to one of Claims 5 to 9, characterized in that the pivot elements (16) form insertion compartments (21) for price tags, publicity cards or the like (24).

11. Device according to one of Claims 5 to 10, characterized in that a handle (25) is provided on each of the pivot elements (16).

## Revendications

1. Dispositif présentoir pour recevoir et exposer des objets rigides et plats (7 ; 17) tels que des disques ou des cassettes de bandes magnétiques alignés les uns derrière les autres, muni d'un fond (6) et de moyens (10) qui sont prévus les uns derrière les autres à distance au-dessus de ce fond, entre deux délimitations latérales (8, 9), en vue du soutien et du montage pivotant des objets individuels (7 ; 17) qui, de ce fait, peuvent être animés d'un mouvement pivotant alternatif entre une position sensiblement verticale inclinée vers l'arrière et une position sensiblement verticale inclinée vers l'avant, les moyens (10) assurant le soutien et le montage pivotant d'un objet individuel (7 ; 17) étant alors formés par une paire de tiges de retenue (10) mutuellement parallèles qui s'étendent transversalement, sont espacées dans chaque paire et sont adaptées à l'épaisseur et à la hauteur des objets (7 ; 17), quant à leurs dimensions de section ainsi qu'à la distance les séparant du fond (6), de telle sorte que lesdits objets portent simultanément contre les deux tiges de retenue voisines (10) lorsqu'ils occupent la position inclinée, respectivement par leur face antérieure et leur face postérieure au-dessous de leurs centres de gravité, caractérisé par le fait que toutes les tiges de retenue (10) sont mutuellement espacées d'une distance égale, de façon que deux tiges de retenue quelconques juxtaposées forment une paire pour recevoir un objet, et de façon que, en présence d'un objet ayant pivoté à la position inclinée vers l'avant et d'un objet successif ayant pivoté à la position inclinée vers l'arrière, les bords inférieurs de ces objets ne se gênent pas les uns les autres.

2. Dispositif selon la revendication 1, caractérisé par le fait que le fond (6) est de réalisation discontinue.

3. Dispositif selon la revendication 2, caractérisé par le fait que le fond (6) est formé par des ailes horizontales (4, 5) de profilés en cornière (2, 3) définissant les délimitations latérales (8, 9).

4. Dispositif selon l'une des revendications 1 à 3, caractérisé par le fait que les tiges de retenue (10) sont montées à rotation dans les délimitations latérales (2, 3 ; 12, 13).

5. Dispositif selon l'une des revendications 1 à 4, caractérisé par le fait que des éléments pivotants (16) installés sur les tiges de retenue (10), dont ils font saillie vers le haut, s'étendent pour l'essentiel sur la longueur des tiges de retenue (10) ou, respectivement, sur la largeur du dispositif (1).

6. Dispositif selon la revendication 5, caractérisé par le fait que les éléments pivotants (16) sont reliés rigidement aux tiges de retenue (10) montées rotatives.

7. Dispositif selon la revendication 5, caractérisé par le fait que les éléments pivotants (16) forment un seul tenant avec les tiges de retenue (10) montées rotatives.

8. Dispositif selon la revendication 5, caractérisé par le fait que les éléments pivotants (16) sont montés à pivotement sur les tiges de retenue (10).

9. Dispositif selon l'une des revendications 5 à 8, caractérisé par le fait que les éléments pivotants (16) réalisés en tant qu'étriers pivotants présentent, observés en élévation, sensiblement la forme d'un « T », d'un « U » inversé ou d'un « L », la membrure horizontale (20) occupant la position haute ayant alors la même épaisseur que les tiges de retenue (10), afin de former un élément d'espacement entre les objets (17).

10. Dispositif selon l'une des revendications 5 à 9, caractérisé par le fait que les éléments pivotants (16) forment des poches réceptrices (21) pour des étiquettes de prix, des affichettes publicitaires ou objets analogues (24).

11. Dispositif selon l'une des revendications 5 à 10, caractérisé par le fait qu'une poignée (25) est prévue sur chaque élément pivotant (16).

0 155 258

Fig. 1

Fig. 2

# Fig.3

# Fig.4

# Fig.5

2